# EUROPÄISCHE PATENTSCHRIFT

(11) **EP 2 555 403 B1**
(45) Veröffentlichungstag und Bekanntmachung des Hinweises auf die Patenterteilung: **10.01.2018**
(21) Anmeldenummer: 11176297.7
(22) Anmeldetag: 02.08.2011
(51) Int. Cl.: H02M 3/335

(54) **Schaltwandler und Betriebsverfahren des Schaltwandlers**
Switching converter and method for operating the converter
Convertisseur et procédé de fonctionnement du convertisseur

(43) Veröffentlichungstag der Anmeldung: 06.02.2013
(73) Patentinhaber: Siemens Aktiengesellschaft, 80333 München (DE)
(72) Erfinder: Berger, Erik, 1030 Wien (AT)
(74) Vertreter: Maier, Daniel Oliver

(56) Entgegenhaltungen:
- WO-A1-2006/000610
- JP-A- 10 225 116
- STMicroelectronics: "constant voltage and constant current controller for battery chargers and adaptors", , 31. Januar 2002 (2002-01-31), XP002667649, Gefunden im Internet: URL:http://www.datasheetcatalog.org/datash eet/stmicroelectronics/8484.pdf [gefunden am 2012-01-20]

## Beschreibung

Die Erfindung betrifft einen Schaltwandler, umfassend einen sekundärseitigen Stromregler und einen sekundärseitigen Spannungsregler zur Erzeugung eines Reglersignals, mit einem Koppelelement zur Übertragung des Reglersignals auf eine primärseitige Ansteuerschaltung. Zudem betrifft die Erfindung ein Betriebsverfahren des Schaltwandlers.

Schaltwandler werden verwendet, um Verbraucher mit einer geregelten Ausgangsspannung zu versorgen. Dabei wird zumindest ein taktendes Schaltelement mittels einer Ansteuerschaltung mit einem variablen Tastverhältnis angesteuert. Das Tastverhältnis bestimmt die mittels Schaltwandler übertragene Energie. Schaltwandler mit Potenzialtrennung weisen sekundärseitig üblicherweise einen Stromregler und einen Spannungsregler mit einem PI-Regelverhalten oder einem I-Regelverhalten auf. Primärseitig ist die Ansteuerschaltung angeordnet, der über ein Koppelelement das sekundärseitig erzeugte Reglersignal zur Änderung des Tastverhältnisses zugeführt ist. Versorgt wird die Ansteuerschaltung üblicherweise mittels einer primärseitigen Hilfsversorgung.

Einen Schaltwandler mit einer Spannungsregelung und einer Stromregelung kennt man beispielsweise aus der WO 2006/000610 A1. Dabei ist der Reglerausgang mit Widerständen und Kondensatoren beschaltet, um den Pegel des Reglersignals anzupassen. Eine ähnliche Beschaltung ist auch aus der Schrift STMicroelectronics: "constant voltage and constant current controller for battery chargers and adaptors", 31. Jänner 2002 (http:\\www.datasheetcatalog.org/datasheet/ stmicroelectronics/8484.pdf), bekannt.

Aus der JP 10 225116 A ist ein Schaltwandler bekannt, bei dem ein Reglerausgang über einen Transistor an eine Referenzspannung geführt ist, wobei die Referenzspannung mittels einer Zenerdiode bereitgestellt wird.

In der Regel können Schaltwandler für eine gewisse Zeit in einem Überlastbereich betrieben werden, wobei der Strom auf einen zulässigen Wert begrenzt wird. In einem solchen Betriebsmodus kommt es fallweise zu schlagartigen Entlastungen, wobei am Ausgang des Schaltwandlers eine Schwingung auftritt, wenn nicht entsprechende Gegenmaßnahmen getroffen werden, insbesondere dann, wenn zusätzlich zum Verbraucher eine relativ hohe kapazitive Last gegeben ist. Die Problematik besteht darin, dass der Spannungsregler mit PI-Regelverhalten oder I-Regelverhalten durch eine reduzierte Ausgangsspannung im Begrenzungszustand in einem Sättigungszustand verharrt. Kommt es plötzlich zu einer Entlastung (Leerlauf), dauert es einige Zeit, bis der Spannungsregler aus der Sättigung kommt und aktiv zu regeln beginnt. Während dieser Verzögerungszeit wird die gesamte übertragene Leistung für die Aufladung ausgangsseitiger Kondensatoren verwendet, wodurch es zu einem deutlichen Überschwingen kommt. Dieses durchwegs hohe Überschwingen hat aufgrund der Reglerdynamik zur Folge, dass das Tastverhältnis auf Null reduziert wird. Dabei kann es zu einem Ausfall der primärseitigen Hilfsversorgung kommen, wenn die ausgangsseitigen Kondensatoren entsprechend groß sind. Bei einem Ausfall der primärseitigen Hilfsversorgung ist der Schaltwandler kurzzeitig nicht mehr funktionsfähig.

Zur Lösung dieses Problems kennt man aus der AT 405 704 A eine Schaltwandleranordnung, umfassend einen Hilfsregler zur Erzeugung einer zweiten Stellgröße für die Ansteuerschaltung in Abhängigkeit von der Abweichung einer Hilfsgleichspannung von einem zweiten Sollwert und eine Auswahlschaltung zur bevorzugten Zuführung der Stellgröße jenes Reglers an die Ansteuerschaltung, dessen Ist-Wert unterhalb des zugehörigen Sollwertes liegt.

Wird im Begrenzungszustand die Ausgangsspannung heruntergeregelt, kann dies nur bis zu einem Punkt geschehen, bei dem die Hilfsgleichspannung bis zu einem vertretbaren Mindestwert absinkt. Sodann wird die Regelung von dem Hilfsregler übernommen, der nun über die Ansteuerschaltung für die Aufrechterhaltung der Hilfsgleichspannung sorgt. Eine derartige Maßnahme erfordert jedoch einen aufwändigen Schaltungsaufbau.

Der Erfindung liegt die Aufgabe zugrunde, für einen Schaltwandler der eingangs genannten Art und für ein Betriebsverfahren des Schaltwandlers eine Verbesserung gegenüber dem Stand der Technik anzugeben.

Erfindungsgemäß wird diese Aufgabe gelöst durch eine Anordnung gemäß Anspruch 1 und ein Verfahren gemäß Anspruch 5. Weiterbildungen finden sich in den abhängigen Ansprüchen.

Die erfindungsgemäße Anordnung sieht vor, dass das Reglersignal sekundärseitig zusätzlich einer Stromabzweigschaltung, welche lediglich aus einem Widerstand und einer in Serie dazu geschalteten Zenerdiode besteht, zugeführt ist. Unter einer Stromabzweigschaltung wird hier eine Schaltung verstanden, deren Funktion darin besteht, einen Teil des durch das Koppelelement fließenden Stromes an einem Schaltungspunkt zwischen dem Koppelelement und den Reglern in einen zusätzlichen Pfad, der an ein Bezugspotenzial angeschlossen ist, abzuzweigen.

Das als Strom durch das Koppelelement vorliegende Reglersignal wird in zwei Pfade aufgeteilt, sodass nur ein Teilstrom zu den Reglern fließt, wodurch bei einem Übergang von einer Überlast zu einer Entlastung (Leerlauf) ein verbessertes Reglerverhalten auftritt. Am Schaltwandler angeschlossene kapazitive Lasten führen nicht mehr zu einem starken Überschwingen des Reglersignals, wodurch ein Ausfall der primärseitigen Hilfsversorgung vermieden wird. In weiterer Folge kommt es nicht mehr zu Schwingungen am Ausgang des Schaltwandlers.

Der Widerstand ist dabei hochohmig ausgelegt, sodass Verluste unbedeutend bleiben.

Durch die Anordnung der Zenerdiode ist sichergestellt, dass bei kapazitiven Verbrauchern bis zu einer Spannung, die der Begrenzungsspannung (Durchbruchspannung der Zenerdiode) entspricht, das Anfahrverhalten beibehalten wird. Die Stromabzweigschaltung beginnt erst dann zu wirkten, wenn die Begrenzungsspannung erreicht wird. Auf diese Weise bleibt einerseits das Anfahrverhalten unverändert und andererseits sind die gewünschten Stabilisierungsmaßnahmen der Regelung wirksam.

In einer einfachen Ausprägung ist das Koppelelement als Optokoppler ausgebildet. Dabei ist es günstig, wenn die Stromabzweigschaltung zwischen der Kathode der Optokopplerdiode und einem sekundärseitigen Bezugspotenzial angeordnet ist. Die Stromabzweigschaltung greift dann direkt am Koppelelement ein, sodass die erwünschte Wirkung ohne Zeitverzögerung eintritt. Dynamische Hübe des Reglersignals sind auch im Überlastbereich bei schlagartiger Entlastung nur so groß, dass eine ausreichend rasche Reaktion der Regelung möglich ist.

Günstig wirken sich die angegeben Stabilisierungsmaßnahmen bei Sperrwandlern aus.

Ein erfindungsgemäßes Betriebsverfahren sieht vor, dass ein sekundärseitiges Reglersignal mittels eines Stromreglers und eines Spannungsreglers gebildet und ein Teil des Reglersignals mittels einer Stromabzweigschaltung, welche lediglich aus einem Widerstand und einer in Serie dazu geschalteten Zenerdiode besteht, abgezweigt wird und dass das Reglersignal mittels eines Koppelelements einer primärseitigen Ansteuerschaltung zugeführt wird.

Erfindungsgemäß wird der beschriebene Schaltwandler zur Versorgung zumindest eines kapazitiven Verbrauchers verwendet.

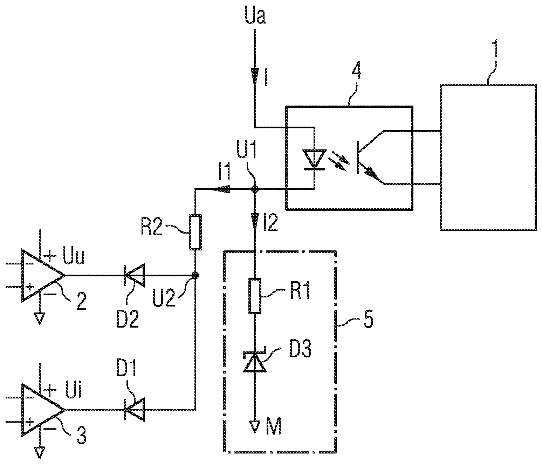

Die Erfindung wird nachfolgend in beispielhafter Weise unter Bezugnahme auf die beigefügte Figur erläutert.

Die Fig. zeigt in schematischer Darstellung ein Blockschaltbild eines möglichen Schaltwandleraufbaus.

Der Schaltwandler ist beispielsweise als Sperrwandler ausgebildet. Primärseitig weist der Schaltwandler eine Ansteuerschaltung 1 auf, welche ein Schaltelement des Schaltwandlers ansteuert und mittels einer primärseitigen Hilfsversorgung versorgt wird. Dabei handelt es sich üblicherweise um einen PWM-Kontroller, welcher das Schaltelement mit einem variablen Tastverhältnis ansteuert. Über ein als Optokoppler ausgebildetes Koppelelement 4 wird ein Reglersignal I auf die Ansteuerschaltung 1 übertragen. Dieses Reglersignal I ergibt sich aus der Ausgangsspannung Ua des Schaltwandlers und den Ausgangsgrößen Uu, Ui des sekundärseitigen Spannungsreglers 2 und des sekundärseitigen Stromreglers 3. Der Spannungsregler 2 weist üblicherweise ein PI-Regelverhalten oder ein I-Regelverhalten auf.

Konkret liegt die Ausgangsspannung Ua an der Anode der Optokopplerdiode an und eine erste Spannung U1 liegt an der Kathode der Optokopplerdiode an. Die Differenz zwischen Ausgangsspannung Ua und der ersten Spannung U1 entspricht also dem Spannungsabfall an der Optokopplerdiode. Die Kathode der Optokopplerdiode ist dabei über einen Begrenzungswiderstand R2 und eine erste Diode D1 mit dem Stromregler 3 verbunden. Parallel dazu ist die Kathode der Optokopplerdiode über den Begrenzungswiderstand R2 und eine zweite Diode D2 mit dem Spannungsregler 2 verbunden. An einem Schaltungsknoten zwischen dem Begrenzungswiderstand R2 und den Dioden D1, D2 liegt eine zweite Spannung U2 an.

Im Normalbetrieb regelt der Spannungsregler 2 die Ausgangsspannung Ua des Schaltwandlers auf einen vorgegebenen Wert. Im Überlastbetrieb fällt die Ausgangsspannung Ua ab und der Stromregler 3 regelt den Strom am Ausgang des Schaltwandlers auf einen zulässigen Maximalwert.

Ohne erfindungsgemäße Stromabzweigschaltung 5 verhält sich die Schaltung im Überlastbetrieb wie folgt. Wenn an dem Schaltwandler ein kapazitiver Verbraucher angeschlossen ist und eine schlagartige Entlastung auftritt, steigt die Ausgangsspannung Ua des Schaltwandlers an und die Kapazitäten des Verbrauchers werden aufgeladen, bis die Regelung zu reagieren beginnen. Ein in der Ansteuerschaltung 1 wirkender primärseitiger Regler nimmt zwar schon die Pulsbreite für das Schaltelement zurück, aber bei einem nahezu reinen kapazitiven Verbraucher steigt die Ausgangsspannung Ua des Schaltwandlers weiter. Der Spannungsregler 2 versucht, die Ausgangsspannung Ua am Schaltwandler auszuregeln und geht dabei in Sättigung, wobei die Pulse des Schaltelements ganz abgestellt werden. Infolgedessen bricht die Ausgangsspannung Ua des Schaltwandlers um einen nicht vernachlässigbaren Wert (einige Volt) ein, bis der Spannungsregler 2 aus der Sättigung herauskommt. Das lange Unterbleiben der Pulse des Schaltelements bewirkt einen Zusammenbruch der primärseitigen Hilfsversorgung des Schaltwandlers. Es erfolgt ein Neustart des Schaltwandlers, wobei die Ausgangsspannung Ua des Schaltwandlers wieder überschwingt und es wieder zur beschriebenen Reglersättigung kommt. Ein Schwingen der Ausgangsspannung Ua des Schaltwandlers um einige Volt über einige Zehntelsekunden hinweg ist die Folge.

Zur Verhinderung eines solchen Schwingverhaltens wird erfindungsgemäß eine Stromabzweigschaltung 5 angeordnet, um das Reglersignal I in zwei Teilströme I1, I2 aufzuteilen und nur einen Teilstrom I1 den Reglern 2, 3 zuzuführen. In einem einfachen Beispiel wird dazu die Kathode der Optokopplerdiode zusätzlich über eine Widerstand R1 mit einem Bezugspotenzial M verbunden. Für ein unverändertes Anfahrverhalten bei Verbrauchern mit hohen Kapazitäten ist es günstig, wenn dabei ein Spannungsbegrenzungselement D3, z.B. eine Zenerdiode, in Serie geschaltet ist.

Das damit verbesserte Reglerverhalten bewirkt folgende Vorteile. Das Überschwingen der Ausgangsspannung Ua bei einem schlagartigen Wechsel von Überlast zu Leerlauf ist deutlich reduziert. Ein solcher Wechsel bedeutet, dass ausgangsseitig ein Übergang von insbesondere hoher kapazitiver Last mit einem Strom größer als Nennstrom zu einer reinen kapazitiven Last erfolgt. Die Ausgangsgröße Ui des Stromreglers 3 liegt gegenüber einer Anordnung ohne Stromabzweigschaltung 5 potentialmäßig höher, weil der Stromregler 3 nicht mehr den gesamten Strom I durch die Optokopplerdiode trägt. Konkret fließt nur mehr ein erster Teilstrom I1 durch den Regler 3 und ein zweiter Teilstrom I2 durch die Stromabzweigschaltung 5. Im Überlastfall mit Strombegrenzung entspricht die zweite Spannung U2 in der Fig. der Ausgangsgröße Ui des Stromreglers 3, abzüglich der an der ersten Diode D1 abfallenden Spannung. Der erste Teilstrom I1 ergibt sich dabei aus der ersten Spannung U1 abzüglich der zweiten Spannung U2, dividiert durch den Widerstandswert des zweiten Widerstands R2. Weil dieser Teilstrom I1 geringer ist als der ohne Stromabzweigschaltung 5 fließende Strom I, ist somit das Potenzial (die zweite Spannung U2 bezogen auf das Bezugspotenzial M) am Stromregler 3 mit angeordneter Stromabzweigschaltung 5 höher. Dadurch kommt es mit angeordneter Stromabzweigschaltung 5 zu einem schnelleren Übergang von einer Strombegrenzung zu einer Spannungsregelung, sobald ein Wechsel von Überlast zu Leerlauf auftritt. Die während des Übergangs ansteigende Ausgangsgröße Uu des Spannungsreglers 2 erreicht schneller den Wert der Ausgangsgröße Ui des Stromreglers 3 und damit setzt die Spannungsregelung früher ein. Bei Spannungsregelung entspricht dann die zweite Spannung U2 in der Fig. der Ausgangsgröße Uu des Spannungsreglers 2 abzüglich des Spannungsabfalls an der zweiten Diode D2.

Zudem wird der Teilstrom I2 durch den Widerstand R1 und damit der entsprechende Anteil des Reglersignals I sofort größer, sobald infolge eines Wechsels von Überlast zu Leerlauf die Ausgangsspannung Ua ansteigt. Das führ zu einer sofortigen Reduktion der Pulsbreite des Schaltelements. Dieser Effekt tritt bei einem üblichen Aufbau des Schaltwandlers auf, bei dem ein Stromanstieg durch die Optokopplerdiode (stärkeres Leuchten) eine Pulsbreitenreduktion mittels Ansteuerschaltung 1 bewirkt.

Die erfindungsgemäßen Maßnahmen führen dazu, dass der Spannungsregler 2 nicht in Sättigung gelangt. Es tritt kein langes Ausbleiben der Pulse des Schaltelements auf und somit kommt es auch nicht zu einem Zusammenbruch der primärseitigen Hilfsversorgung mit einem neuerlichen Anfahren des Schaltwandlers. Nach einem einmaligen Ausregelungsvorgang mit abfallender und ansteigender Ausgangsgröße Uu des Spannungsreglers 2 stabilisiert sich die Regelung sofort.

Die Auslegung der einzelnen Elemente hängt von der Dimensionierung des Schaltwandlers ab. Beispielsweise wird die Durchbruchspannung der Zenerdiode D3 so gewählt, dass die Stromabzweigschaltung 5 erst dann wirkt, wenn die Ausgangsspannung Ua nach einem Hochlaufvorgang einen bestimmten Wert erreicht hat. Die Wirkung der Stromabzweigschaltung 5 tritt ein, wenn die Ausgangsspannung Ua abzüglich des Spannungsabfalls an der Optokopplerdiode größer als die Durchbruchspannung der Zenerdiode D3 wird.

Die Dimensionierung der Widerstände R1, R2 hängt von der Höhe des Stromes durch die Optokopplerdiode (Reglersignal I) ab. Bei Nennleistung nimmt dieser Strom I einen definierten Wert an (100%). Bei Leerlauf steigt der Strom I auf einen Maximalwert an (z.B. 120% des Stromes I bei Nennleistung). Um in jedem Fall eine funktionierende Regelung sicherzustellen sind die Widerstände R1, R2 so dimensioniert, dass der Teilstrom I2 durch die Stromabzweigschaltung 5 immer kleiner als der Gesamtstrom I bei Nennleistung ist (z.B. I2 < 70% des Stromes I bei Nennleistung). Der verbleibende Teilstrom I1 für die Regler 2, 3 bleibt dann ausreichend groß, um die Regelung aufrecht zu erhalten.

## Patentansprüche

1. Schaltwandler, umfassend einen sekundärseitigen Stromregler (3) und einen sekundärseitigen Spannungsregler (2) zur Erzeugung eines Reglersignals (I), mit einem Koppelelement (4) zur Übertragung des Reglersignals (I) auf eine primärseitige Ansteuerschaltung (1), **dadurch gekennzeichnet, dass** das Reglersignal (I) sekundärseitig zusätzlich einer Stromabzweigschaltung (5), welche lediglich aus einem Widerstand (R1) und einer in Serie dazu geschalteten Zenerdiode (D3) besteht, zugeführt ist.

2. Schaltwandler nach Anspruch 1, **dadurch gekennzeichnet, dass** das Koppelelement (4) als Optokoppler ausgebildet ist.

3. Schaltwandler nach Anspruch 2, **dadurch gekennzeichnet, dass** die Stromabzweigschaltung (5) zwischen der Kathode der Optokopplerdiode und einem sekundärseitigen Bezugspotenzial (M) angeordnet ist.

4. Schaltwandler nach einem der Ansprüche 1 bis 3, **dadurch gekennzeichnet, dass** der Schaltwandler als Sperrwandler ausgebildet ist.

5. Betriebsverfahren eines Schaltwandlers nach einem der Ansprüche 1 bis 4, **dadurch gekennzeichnet, dass** ein sekundärseitiges Reglersignal (I) mittels eines Stromreglers (3) und eines Spannungsreglers (2) gebildet und ein Teil (I2) des Reglersignals (I) mittels einer Stromabzweigschaltung (5), welche lediglich aus einem Widerstand (R1) und einer in Serie dazu geschalteten Zenerdiode (D3) besteht, abgezweigt wird und dass das Reglersignal (I) mittels eines Koppelelements (4) einer primärseitigen Ansteuerschaltung (1) zugeführt wird.

6. Schaltwandler nach einem der Ansprüche 1 bis 4, **dadurch gekennzeichnet, dass** der Schaltwandler zur Versorgung zumindest eines kapazitiven Verbrauchers verwendet wird.

## Claims

1. Switching converter, comprising a secondary-side current regulator (3) and a secondary-side voltage regulator (2) for generating a regulator signal (I), having a coupling element (4) for transmitting the regulator signal (I) to a primary-side trigger circuit (1), **characterised in that** the regulator signal (I) is supplied on the secondary side additionally to a current branch circuit (5), which consists merely of a resistor (R1) and a Zener diode (D3) connected in series thereto.

2. Switching converter according to claim 1, **characterised in that** the coupling element (4) is designed as an optocoupler.

3. Switching converter according to claim 2, **characterised in that** the power branch circuit (5) is arranged between the cathode of the optocoupler diode and a secondary-side reference potential (M).

4. Switching converter according to one of claims 1 to 3, **characterised in that** the switching converter is designed as a reverse converter.

5. Operating method of a switching converter according to one of claims 1 to 4, **characterised in that** a secondary-side regulator signal (I) is formed by means of a current regulator (3) and a voltage regulator (2) and a part (12) of the regulator signal (I) is branched off by means of a current branch circuit (5), which consists merely of a resistor (R1) and a Zener diode (D3) connected in series thereto, and that the regulator signal (I) is supplied to a primary-side trigger circuit (1) by means of a coupling element (4).

6. Switching converter according to one of claims 1 to 4, **characterised in that** the switching converter is used to supply at least one capacitive load.

## Revendications

1. Convertisseur comprenant un régulateur de courant (3) côté secondaire, et un régulateur de tension (2) côté secondaire pour générer un signal de régulation (I), avec un élément de couplage (4) pour transmettre le signal de régulation (I) à un circuit de commande (1) côté primaire, **caractérisé en ce que** le signal de régulation (I) est en outre amené, côté secondaire, à un circuit de dérivation de courant (5) composé uniquement d'une résistance (R1) et d'une diode Zener (D3) montée en série avec elle.

2. Convertisseur selon la revendication 1, **caractérisé en ce que** l'élément de couplage (4) est réalisé en tant qu'optocoupleur.

3. Convertisseur selon la revendication 2, **caractérisé en ce que** le circuit de dérivation de courant (5) est agencé entre la cathode de la diode de l'optocoupleur et un potentiel de référence (M) côté secondaire.

4. Convertisseur selon l'une des revendications 1 à 3, **caractérisé en ce que** le convertisseur est réalisé en tant que convertisseur flyback.

5. Procédé d'exploitation d'un convertisseur selon l'une des revendications 1 à 4, **caractérisé en ce qu'**un signal de régulation (I) côté secondaire est formé au moyen d'un régulateur de courant (3) et d'un régulateur de tension (2) et une partie (I2) du signal de régulation (I) est dérivée au moyen d'un circuit de dérivation de courant (5) composé uniquement d'une résistance (R1) et d'une diode Zener (D3) montée en série et **en ce que** le signal de régulation (I) est amené à un circuit de commande (1) côté primaire au moyen d'un élément de couplage (4).

6. Convertisseur selon l'une des revendications 1 à 4, **caractérisé en ce que** le convertisseur est utilisé pour alimenter au moins un consommateur capacitif.
